# FASCICULE DE BREVET EUROPEEN

(11) **EP 2 251 249 B1**
(45) Date de publication et mention de la délivrance du brevet: **25.04.2012**
(21) Numéro de dépôt: 10161491.5
(22) Date de dépôt: 29.04.2010
(51) Int. Cl.: B62D 25/24, B65D 39/00, B65D 51/08

(54) **Dispositif obturateur d'un orifice pratiqué dans une pièce de faible épaisseur, telle qu'une tôle**
Deckel für eine Öffnung in einem dünnen Teil, wie einem Blech
Cover for an opening in a thin piece, like a steel sheet

(30) Priorité: 12.05.2009 FR 0953129
(43) Date de publication de la demande: 17.11.2010
(73) Titulaire: LISI Automotive Rapid, 95650 Puiseux-Pontoise (FR)
(72) Inventeur: Viennois, Fabien, 92800, PUTEAUX (FR); Maurice, Philippe, 68100, MULHOUSE (FR)
(74) Mandataire: Berger, Helmut

(56) Documents cités:
- EP-A2- 1 291 255
- WO-A1-2006/056289
- DE-A1- 3 831 433
- DE-B3- 10 333 578

## Description

L'invention concerne un dispositif obturateur d'un orifice pratiqué dans une pièce de faible épaisseur, telle qu'une tôle notamment d'un véhicule automobile, du type comprenant une pièce d'obturation de l'orifice, qui comprend une partie tubulaire destinée à être introduite dans l'orifice à obturer et une paroi de fermeture de la partie tubulaire, à une extrémité de celle-ci, qui comporte un rebord périphérique par lequel la pièce prend appui sur le bord de l'orifice, la face extérieure de la paroi de fermeture étant recouverte d'une couche d'un produit anti-gravillonnage et la partie tubulaire étant pourvue de moyens de verrouillage de la pièce d'obturation dans l'orifice à obturer. Un dispositif obturateur en matière plastique et comportant les caractéristiques du préambule de la revendication 1 est connu du document DE 38 31 433 A1.

Dans les dispositifs de ce type, qui sont connus, la pièce d'obturation est réalisée en métal, ce qui présente les inconvénients majeurs qu'il faut prévoir, pour assurer l'accrochage de la couche anti-gravillonnage un traitement de surface, c'est-à-dire une étape supplémentaire dans le processus de fabrication, et que la pièce est relativement difficile à mettre en place dans l'orifice.

L'invention a pour but de pallier ces inconvénients.

Pour atteindre ce but, l'invention est caractérisée par une pièce d'obturation selon la revendication 1.

Selon une caractéristique de l'invention, le dispositif est caractérisé en ce que la partie tubulaire est de forme ovale et sa paroi porte sur sa face extérieure des éléments de crochet de verrouillage sur le bord de l'orifice, donc chacun est prévu sur une partie de la paroi qui est élastiquement déformable.

Selon une autre caractéristique de l'invention, le dispositif est caractérisé en ce que chaque élément de crochet est prévu sur une partie de la paroi, qui présente une découpe au niveau du rebord d'appui, sur une longueur prédéterminée.

Selon encore une autre caractéristique de l'invention, le dispositif est caractérisé en ce que la longueur de la découpe détermine l'élasticité de la partie de paroi porteuse d'un élément de crochet.

Selon encore une autre caractéristique de l'invention, le dispositif est caractérisé en ce que les éléments en relief d'accrochage de la couche anti-gravillonnage sont formés par des picots répartis régulièrement sur la surface extérieure de la paroi de fermeture de la pièce d'obturation.

Selon encore une autre caractéristique de l'invention, le dispositif est caractérisé en ce que la pièce d'obturation est réalisée par moulage par injection.

Selon encore une autre caractéristique de l'invention, le dispositif est caractérisé en ce que la pièce d'obturation est réalisée en polyamide.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue latérale du dispositif obturateur selon l'invention dans sa position d'obturation d'un orifice pratiqué dans une tôle ;
- la figure 2 est une vue en perspective de la pièce d'obturation selon la figure 1 ;
- la figure 3 est une autre vue en perspective de la pièce selon la figure 2, montrant la face extérieure pourvue d'éléments d'accrochage de la couche de produit anti-gravillonnage ;
- la figure 4 est une vue du dessous de la pièce d'obturateur selon la figure 2, dans la direction de la flèche IV, et
- la figure 5 est une vue en coupe, avec arrachement, le long de la ligne V-V de la figure 4.

L'invention est notamment applicable dans le domaine des véhicules automobiles lorsqu'il s'agit de boucher des orifices de poinçonnage d'évacuation de cataphorèse dans une tôle de sous-caisse du véhicule et faire adhérer à la face extérieure de la pièce d'obturation une couche de produit anti-gravillonnage, en général de peinture PVC.

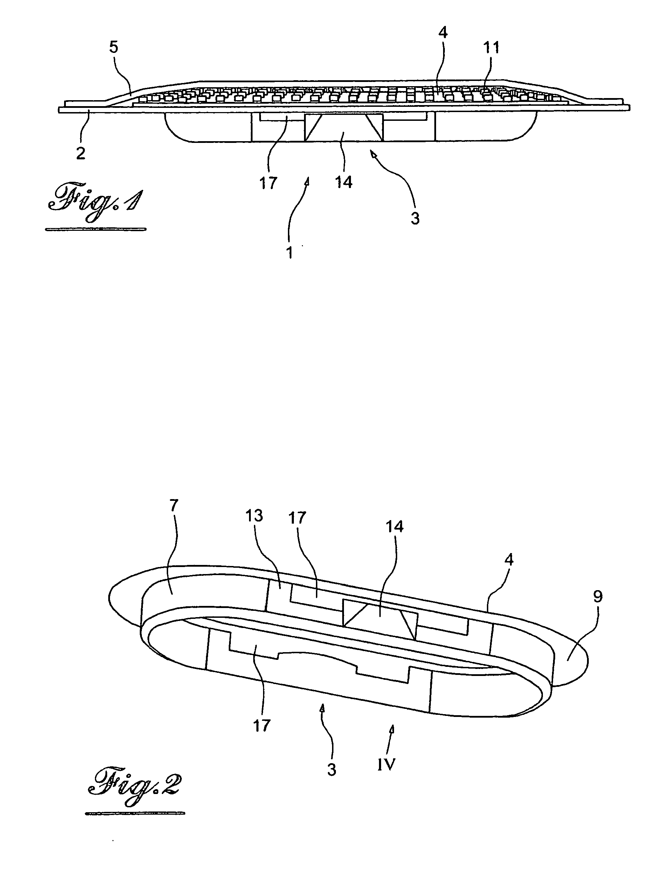

La figure 1 montre le dispositif d'obturation selon l'invention, destiné à boucher un orifice d'évacuation de cataphorèse dans une tôle de véhicule 2, le dispositif comprenant essentiellement une pièce d'obturation 3 dont la face extérieure 4 ainsi que la zone de la tôle environnante sont recouvertes d'une couche de produit anti-gravillonnage 5.

En se reportant aux figures 2 à 5, on constate que la pièce d'obturation 3, qui est réalisée en matière plastique, par exemple polyamide, présente une forme générale ovale adaptée pour être placée dans un orifice formant une boutonnière de forme appropriée, pratiquée dans la tôle 2. Plus précisément, la pièce 3 comporte une partie tubulaire 7 formée par une paroi ovale par laquelle la pièce s'engage dans la boutonnière de la tôle, qui est fermée à une extrémité par une paroi 8 légèrement bombée et qui s'étend vers l'extérieur, au-delà de la paroi tubulaire 7, en formant un rebord périphérique 9 constituant une lèvre d'étanchéité périphérique par laquelle la pièce repose sur le bord de l'orifice de poinçonnage boutonnière en assurant ainsi que cet orifice soit complètement bouché.

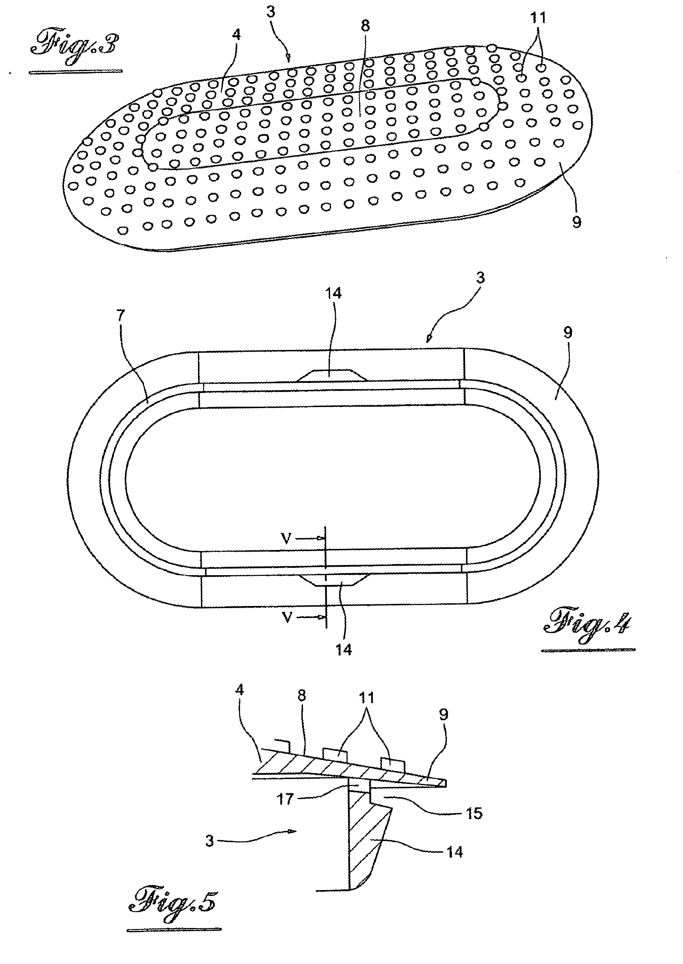

La surface extérieure 8 comporte sur sa face extérieure des éléments en relief 11 assurant une accroche mécanique de la couche anti-gravillonnage 5. Dans l'exemple représenté à la figure 3, ces éléments 11 sont en forme de picots qui sont régulièrement répartis sur la surface 8.

La mise en place de la pièce dans l'orifice de poinçonnage se fait par effet de verrouillage. A cette fin, la paroi tubulaire 7 comporte sur sa face extérieure de chacun de ses côtés longitudinaux 13, dans sa zone centrale, un élément en forme de crochet 14. Ces éléments sont formés par une augmentation de l'épaisseur de la paroi 7 à ces endroits, à partir de l'extrémité libre en direction de la lèvre 9, avec un retour brusque en 15 à l'épaisseur normale de la paroi. Dans sa position d'obturation de l'orifice de poinçonnage, le bord de ce dernier est engagé dans la partie en retrait 15.

Pour que les parties en crochet 14 puissent s'effacer élastiquement lors de la mise en place de la pièce d'obturation dans l'orifice de poinçonnage, la paroi 7 présente une découpe 17 au niveau de la lèvre 9, qui s'étend de part et d'autre de chaque élément de crochet 14, sur une longueur appropriée, par exemple comme dans l'exemple représenté, presque jusqu'au début des zones d'extrémité arrondies. C'est en donnant à ces découpes 17 des longueurs appropriées que l'élasticité des parties en crochet 14 peut être adaptée à des conditions de manipulation, c'est-à-dire de mise en place souhaitée.

Concernant la mise en place des pièces d'obturation selon l'invention, elle ressort déjà de la description qui vient d'être faite. Il suffit de pousser la pièce dans l'orifice de poinçonnage. L'élasticité de la paroi dans la zone des éléments de crochet 14, de la partie tubulaire 7, permet cette introduction dans l'orifice jusqu'à ce que la lèvre 9 vienne en appui sur le bord de l'orifice, le verrouillage de la pièce dans cette position étant assurée par les éléments de crochet 14 venant en prise derrière les bords. L'obliquité des faces des retraits 15 assurant l'immobilité de la pièce sur le bord de la tôle.

L'invention présente de nombreux avantages. Etant donné que la pièce est en matière plastique, avantageusement thermoplastique, et ainsi réalisée par moulage par injection, elle peut avoir des formes plus ou moins complexes en fonction des besoins. La pièce sort de la presse à l'état fini. Il n'y a pas besoin d'opérations de reprise. La lèvre de la pièce d'obturation assure un bouchage complet de l'orifice de poinçonnage. La pièce n'a pas de sens de montage et la couche d'anti-gravillonnage s'accroche mécaniquement à la pièce.

Bien entendu, de multiples modifications peuvent être apportées au mode de réalisation de l'invention qui est représenté sur les figures sans sortir du cadre de l'invention. Ainsi, les éléments en relief, au lieu d'être des picots, pourraient aussi comprendre des trous.

## Revendications

1. Dispositif obturateur d'un orifice pratiqué dans une pièce de faible épaisseur, telle qu'une tôle, notamment d'un véhicule automobile, du type comprenant une pièce d'obturation de l'orifice, qui comprend une partie tubulaire destinée à être introduite dans l'orifice à obturer et une paroi de fermeture de la partie tubulaire, à une extrémité de celle-ci, qui comporte un rebord périphérique par lequel la pièce prend appui sur le bord de l'orifice, la face extérieure de la paroi de fermeture portant des éléments en relief et la partie tubulaire étant pourvue de moyens de verrouillage de la pièce d'obturation dans l'orifice à obturer, la pièce d'obturation (3) étant en matière plastique, **caractérisée en ce que** la pièce d'obturation comporte sur sa face extérieure une couche de produit anti-gravillonnage (5) et **en ce que** les éléments en relief (11) sont répartis sur toute la surface extérieure destinée à être recouverte par la couche anti-gravillonnage (5) et constituent des éléments d'accrochage de cette couche.

2. Dispositif obturateur selon la revendication 1, **caractérisé en ce que** la partie tubulaire (7) est de forme ovale et sa paroi porte sur sa face extérieure des éléments (14) de crochet de fixation sur le bord de l'orifice, donc chacun est prévu sur une partie de la paroi (7) qui est élastiquement déformable.

3. Dispositif obturateur selon la revendication 2, **caractérisé en ce que** chaque élément de crochet (14) est prévu sur une partie de la paroi (7), qui présente une découpe (17) au niveau du rebord d'appui (9), sur une longueur prédéterminée.

4. Dispositif obturateur selon la revendication 3, **caractérisé en ce que** la longueur de la découpe (17) détermine l'élasticité de la partie de paroi porteuse d'un élément de crochet (14).

5. Dispositif obturateur selon l'une des revendications 1 à 4, **caractérisé en ce que** les éléments en relief (11) d'accrochage de la couche anti-gravillonnage (5) sont formés par des picots répartis régulièrement sur la surface extérieure de la paroi de fermeture de la pièce d'obturation (3).

6. Dispositif obturateur selon l'une des revendications 1 à 5, **caractérisé en ce que** les éléments en relief comportent des trous.

7. Dispositif obturateur selon l'une des revendications 1 à 6, **caractérisé en ce que** la pièce d'obturation est réalisée par moulage par injection.

8. Dispositif obturateur selon l'une des revendications 1 à 7, **caractérisé en ce que** la pièce d'obturation (3) est réalisée en polyamide.

## Claims

1. A cover for an opening in a thin piece, such as a steel sheet, in particular of an automobile, of the type comprising a piece covering the opening, which comprises a tubular part intended to be inserted into the opening to be covered and a closing wall of the tubular part, at one end thereof, which includes a peripheral rim on which the piece bears on the edge of the opening, the outer surface of the closing wall supporting raised elements and the tubular part being provided with means for locking the covering piece in the opening to be covered, the covering piece (3) being made from plastic, **characterized in that** the covering piece has a layer of anti-chip (5) product on its outer surface and **in that** the raised elements (11) are distributed over the entire outer surface intended to be covered by the anti-chip layer (5) and make up catching elements of that layer.

2. The cover according to claim 1, **characterized in that** the tubular part (7) has an oval shape and its wall supports, on the outer surface thereof, hook elements (14) for fastening on the edge of the opening, therefore each is provided on a part of the wall (7) that is elastically deformable.

3. The cover according to claim 2, **characterized in that** each hook element (14) is provided on a part of the wall (7), which has a cutout (17) at the support rim (9), over a predetermined length.

4. The cover according to claim 3, **characterized in that** the length of the cutout (17) determines the elasticity of the wall part bearing a hook element (14).

5. The cover according to one of claims 1 to 4, **characterized in that** the raised catching elements (11) of the anti-chip layer (5) are formed by spurs regularly distributed over the outer surface of the closing wall of the covering piece (3).

6. The cover according to one of claims 1 to 5, **characterized in that** the raised elements include holes.

7. The cover according to one of claims 1 to 6, **characterized in that** the covering piece is made by injection molding.

8. The cover according to one of claims 1 to 7, **characterized in that** the covering piece (3) is made from polyamide.

## Patentansprüche

1. Deckel für eine Öffnung in einem dünnen Teil, wie einem Blech, insbesondere eines Kraftfahrzeugs, der Bauart, die ein Verschlussteil der Öffnung umfasst, das einen rohrförmigen Abschnitt umfasst, der dazu bestimmt ist, in die zu verschließende Öffnung eingeführt zu sein, und eine Verschlusswand des rohrförmigen Abschnitts, an einem Ende desselben, die einem Umfangsrand aufweist, durch den sich das Teil auf dem Rand der Öffnung abstützt, wobei die Außenseite der Verschlusswand Reliefelemente trägt und der rohrförmigen Abschnitt mit Verriegelungsmitteln des Verschlussteils in der zu verschließenden Öffnung ausgestattet ist, wobei das Verschlussteil (3) aus Kunststoff ist, **dadurch gekennzeichnet, dass** das Verschlussteil auf seiner Außenseite eine Anti-Splitt-Produktschicht (5) aufweist und dass die Reliefelemente (11)auf der gesamten Außenseite verteilt sind, die dazu bestimmt ist. mit der Anti-Splitt-Schicht (5) bedeckt zu sein und Befestigungselemente dieser Schicht darstellen.

2. Deckel nach Anspruch 1, **dadurch gekennzeichnet, dass** der rohrförmigen Abschnitt (7) oval ist und seine Wand auf seiner Außenseite Hakenelemente (14) zur Befestigung auf dem Rand der Öffnung trägt, von denen jedes auf einem Abschnitt der Wand (7) vorgesehen ist, die elastisch verformbar ist.

3. Deckel nach Anspruch 2, **dadurch gekennzeichnet, dass** jedes Hakenelement (14) auf einem Abschnitt der Wand (7) vorgesehen ist, die über eine vorbestimmte Länge einen Ausschnitt (17) auf Ebene des Stützrands (9) aufweist.

4. Deckel nach Anspruch 3, **dadurch gekennzeichnet, dass** die Länge des Ausschnitts (17) die Elastizität des Abschnitts der Wand bestimmt, die ein Hakenelement (14) trägt.

5. Deckel nach einem der Ansprüche 1 bis 4, **dadurch gekennzeichnet, dass** die Reliefelemente (11) zur Befestigung der Anti-Splitt-Schicht (5) von Stacheln gebildet werden, die auf der Außenseite der Verschlusswand des Verschlussteils (3) gleichmäßig verteilt sind.

6. Deckel nach einem der Ansprüche 1 bis 5, **dadurch gekennzeichnet, dass** die Reliefelemente Löcher aufweisen.

7. Deckel nach einem der Ansprüche 1 bis 6, **dadurch gekennzeichnet, dass** das Verschlussteil durch Spritzgießen hergestellt ist.

8. Deckel nach einem der Ansprüche 1 bis 7, **dadurch gekennzeichnet, dass** das Verschlussteil (3) aus Polyamid hergestellt ist.
